# EUROPEAN PATENT SPECIFICATION

(11) **EP 4 376 622 B1**
(45) Date of publication and mention of the grant of the patent: **10.12.2025**
(21) Application number: 22847712.1
(22) Date of filing: 26.07.2022
(51) Int. Cl.: A21C 1/00, A21C 1/14, A21C 3/04, A23L 7/109, B01F 33/501, B01F 33/84, B01F 35/75

(54) **A PASTA PRODUCT PRODUCTION DEVICE AND METHOD OF USE THEREOF**
VORRICHTUNG ZUR HERSTELLUNG VON TEIGWAREN UND VERFAHREN ZUR VERWENDUNG DAVON
DISPOSITIF DE PRODUCTION DE PRODUIT DE TYPE PÂTE ET SON PROCÉDÉ D'UTILISATION

(30) Priority: 26.07.2021 AU 2021902279
(43) Date of publication of application: 05.06.2024
(73) Proprietor: Marmotta, Gioacchino, Ascot, QLD 4007 (AU)
(72) Inventor: Marmotta, Gioacchino, Ascot, QLD 4007 (AU)
(74) Representative: Papula Oy
(86) International application number: PCT/AU2022/050784
(87) International publication number: WO 2023/004454

(56) References cited:
- EP-A1- 2 047 750
- EP-A1- 3 556 223
- WO-A1-2020/157336
- WO-A1-2020/157336
- CN-A- 106 614 876
- FR-A1- 2 676 619
- RU-C1- 2 221 454
- US-A- 5 479 850

## Description

### TECHNICAL FIELD

The present invention relates to a device and method of producing a fresh pasta product. In particular, the present invention concerns a device and method for producing a fresh pasta product on demand.

### BACKGROUND

Freshly prepared pasta is becoming increasingly popular as consumers attempt to replicate a Mediterranean diet and the associated health benefits.

Since the process of making fresh pasta is time consuming and messy, there has been a rise in manual and electric pasta making machines for both domestic and commercial purposes. However, such machines usually require all raw ingredients to be carefully weighed, inputted and monitored before and during the pasta making process. Additionally, such machines normally require varying degrees of manual adjustments and cleaning before and after each batch of pasta is produced. Such manual involvement greatly detracts from the usability of such machines in terms of time, effort and convenience. Moreover, such machines often require some degree of training/learning, and with commercial forms, perhaps even requiring accreditation before use.

For example, RU221454 C1, CN110876394 A, and CN20943610028U each discloses a pasta making machine having a base, a stirring assembly and an extrusion assembly arranged on the base. However, the machines each require the manual input of one or more or all ingredients.

European Patent No. 0667744 B1 discloses a pasta production machine. However, like the other prior art, this machine requires the introduction of pre-cooked or gelled flour.

US Patent No. 5,186,539 discloses a mixing kneader device for preparing pasta dough. However, the device requires the manual weighing and adding of raw ingredients. Further, the device requires careful monitoring of the resulting pasta dough and the manual adding of water to ensure a required consistency is achieved.

International Patent Publication WO 2007/125586 A1 discloses a mixing apparatus for preparing pasta dough. However, like with the other disclosures, the apparatus requires the manual input of all raw ingredients and only prepares the pasta dough. That is, a further apparatus is required to form a final pasta product.

International Patent Publication WO 2020/157336 A1 discloses a portable, fully automated pasta product production device including a base unit including a motor; a container having a mixing portion including an inlet and an extrusion portion fluidly connected to the mixing portion and including an outlet end and a tubular section defining an internal bore extending from the mixing portion to the outlet end; one or more sensors operatively associated with the mixing portion of the container for measuring the selected volumes of flour and water; a mixing and extrusion assembly operatively associated with the motor and the container, said assembly including a die unit operatively associated with the outlet end and at least one conveyor screw and extending along the internal bore of the extrusion portion to the outlet end, said at least one conveyor screw configured to be axially rotatable relative to the container so as to mix contents received in the mixing portion via the inlet, convey said mixed contents to the extrusion portion and extrude a pasta product at the outlet end via the die unit; a user interface to allow a user to input a desired pasta product to be produced; and a controller operatively associated with the user interface and the one or more sensors and configured to autonomously control operation of the motor, the mixing and extrusion assembly.

It will be clearly understood that, if a prior art publication is referred to herein, this reference does not constitute an admission that the publication forms part of the common general knowledge in the art in Australia or in any other country.

### SUMMARY OF INVENTION

According to the invention, there is provided a device according to claim 1 and a method according to claim 15.

Embodiments of the present invention provide a device and method of producing a pasta product, which may at least partially address one or more of the problems or deficiencies mentioned above or which may provide the public with a useful or commercial choice.

According to a first aspect , there is provided a pasta product production device including:
a base unit including a motor;
a mixing assembly operatively associated with the base unit, said assembly including a container, a mixing outlet and one or more mixing elements connectable to the motor and configured to extend into and move within the container;
a flour dispensing assembly for dispensing a selected volume of flour into the container;
a water dispensing assembly for dispensing a selected volume of water into the container;
an additive dispensing assembly including one or more sources of additives and one or more dispensing mechanisms for dispensing selected volumes of one or more of the additives; and
an extrusion assembly operatively associated with the motor, said extrusion assembly having an inlet end, an opposed outlet end, a die unit operatively associated with the outlet end, an internal bore extending between the inlet end and the opposed outlet end and at least one conveyor screw located therein and axially rotatable relative thereto so as to convey a mixed contents received in the inlet end via the mixing outlet and form a pasta product at the outlet end via the die unit.

According to a second aspect, there is provided a portable, fully automated pasta product production device including:
a base unit including a motor;
a mixing assembly operatively associated with the base unit, said assembly including a container, a mixing outlet and one or more mixing elements connectable to the motor and configured to extend into and move within the container;
a flour dispensing assembly for dispensing flour into the container;
a water dispensing assembly for dispensing water into the container;
an additive dispensing assembly including one or more sources of additives and one or more dispensing mechanisms for dispensing one or more additives;
an extrusion assembly operatively associated with the motor, said extrusion assembly having an inlet end, an opposed outlet end, a die unit operatively associated with the outlet end, an internal bore extending between the inlet end and the opposed outlet end and at least one conveyor screw located therein and axially rotatable relative thereto so as to convey a mixed contents received in the inlet end via the mixing outlet and form a pasta product at the outlet end via the die unit;
one or more sensors operatively associated with the container for measuring selected volumes of flour and water and the one or more additives dispensed into the container;
a user interface to allow a user to input a desired pasta product to be produced; and
a controller operatively associated with the user interface and the one or more sensors and configured to autonomously control operation of the motor, the mixing assembly, the flour dispensing assembly, the water dispensing assembly, the additive dispensing assembly and the extrusion assembly to produce the desired pasta product.

According to a third aspect, there is provided a portable, fully automated pasta product production device including:
a base unit including a motor;
a container having a mixing portion including an inlet and an extrusion portion fluidly connected to the mixing portion and including an outlet end and a tubular section defining an internal bore extending from the mixing portion to the outlet end;
a flour dispensing assembly for dispensing flour into the mixing portion of the container;
a water dispensing assembly for dispensing water into the mixing portion of the container;
an additive dispensing assembly including one or more sources of additives and one or more dispensing mechanisms for dispensing one or more additives into the container;
one or more sensors operatively associated with the mixing portion of the container for measuring selected volumes of flour and water and the one or more additives dispensed into the mixing portion;
a mixing and extrusion assembly operatively associated with the motor and the container, said assembly including die unit operatively associated with the outlet end and at least one conveyor screw located within the container and extending through the mixing portion and along the internal bore of the extrusion portion to the outlet end, said at least one conveyor screw configured to be axially rotatable relative to the container so as to mix a contents received in the mixing portion via the inlet, convey a mixed said contents to the extrusion portion and extrude a pasta product at the outlet via the die unit;
a user interface to allow a user to input a desired pasta product to be produced; and
a controller operatively associated with the user interface and the one or more sensors and configured to autonomously control operation of the motor, the mixing and extrusion assembly, the flour dispensing assembly, the water dispensing assembly and the additive dispensing assembly to produce the desired pasta product.

According to a fourth aspect, there is provided a portable, fully automated pasta product production device including:
a base unit including a motor;
a mixing assembly operatively associated with the base unit, said assembly including a container, a mixing outlet and one or more mixing elements connectable to the motor and configured to extend into and move within the container;
a flour dispensing assembly for dispensing flour into the container;
an egg/water dispensing assembly for interchangeably dispensing egg or water into the container;
an additive dispensing assembly including one or more sources of additives and one or more dispensing mechanisms for dispensing one or more additives;
an extrusion assembly operatively associated with the motor, said extrusion assembly having an inlet end, an opposed outlet end, a die unit operatively associated with the outlet end, an internal bore extending between the inlet end and the opposed outlet end and at least one conveyor screw located therein and axially rotatable relative thereto so as to convey a mixed contents received in the inlet end via the mixing outlet and form a pasta product at the outlet end via the die unit;
one or more sensors operatively associated with the container for measuring selected volumes of flour, egg or water and the one or more additives dispensed into the container;
a user interface to allow a user to input a desired pasta product to be produced; and
a controller operatively associated with the user interface and the one or more sensors and configured to autonomously control operation of the motor, the mixing assembly, the flour dispensing assembly, the egg/water dispensing assembly, the additive dispensing assembly and the extrusion assembly to produce the desired pasta product.

According to a fifth aspect, there is provided a portable, fully automated pasta product production device including:
a base unit including a motor;
a container having a mixing portion including an inlet and an extrusion portion fluidly connected to the mixing portion and including an outlet end and a tubular section defining an internal bore extending from the mixing portion to the outlet end;
a flour dispensing assembly for dispensing flour into the mixing portion of the container;
an egg/water dispensing assembly for interchangeably dispensing egg or water into the mixing portion of the container;
an additive dispensing assembly including one or more sources of additives and one or more dispensing mechanisms for dispensing one or more additives into the container;
one or more sensors operatively associated with the mixing portion of the container for measuring selected volumes of flour, egg or water and the one or more additives dispensed into the mixing portion;
a mixing and extrusion assembly operatively associated with the motor and the container, said assembly including die unit operatively associated with the outlet end and at least one conveyor screw located within the container and extending through the mixing portion and along the internal bore of the extrusion portion to the outlet end, said at least one conveyor screw configured to be axially rotatable relative to the container so as to mix a contents received in the mixing portion via the inlet, convey a mixed said contents to the extrusion portion and extrude a pasta product at the outlet via the die unit;
a user interface to allow a user to input a desired pasta product to be produced; and
a controller operatively associated with the user interface and the one or more sensors and configured to autonomously control operation of the motor, the mixing and extrusion assembly, the flour dispensing assembly, the egg/water dispensing assembly and the additive dispensing assembly to produce the desired pasta product.

Advantageously, the present invention provides a fully automated and robotically assisted pasta production device that is able to produce a selected fresh pasta product type on demand in a timely manner. Being fully automated, through a combination of advanced mechanical and electronic factors, there is no requirement to manually weigh and input individual ingredients, nor perform manual adjustments before or after each batch of pasta is produced. Furthermore, there is no skill or training required in the making of pasta to use the device. Rather, and responsive to receiving user input of a desired pasta product via the user interface, the device automatically calculates and dispenses the individual ingredients and then mixes and extrudes the desired pasta product. The device advantageously requires minimal user input to make a desired pasta product consistently and on demand every time.

As indicated above, the device of the present invention is for producing a pasta product, preferably in a timely and regular manner. For example, it is envisaged that such a device may be located in a supermarket and be routinely used by shoppers to order fresh pasta while they complete their shopping. It is also envisaged that such a device may be located in a restaurant and used to produce fresh pasta on demand. However, a person skilled in the art will appreciate that the device may be capable of broader applications, such as, e.g., for making other dough-based foodstuffs.

Generally speaking, pasta is typically offered for sale in two broad categories, namely dried or fresh pasta. However, even conventional fresh pasta is not truly fresh as it has been handled, packaged and transported to a point of sale, potentially over a number of days. In contrast, the present invention provides a new type of pasta for sale, called "ultra-fresh" pasta. Advantageously, by virtue of the present invention, ultra-fresh pasta is produced on demand at a point of sale and packaged and sealed, or sold as loose ultra-fresh pasta, within minutes.

It is envisaged that the device may produce pasta on demand in a period of about 5mins, about 10mins, about 15mins, about 20mins, about 25mins, about 30mins, about 35mins, about 40mins, about 45mins, about 50mins, about 55mins or about 60mins, preferably between about 5mins and 20mins.

It is also envisaged that the device may be capable of sequentially producing multiple batches of pasta products simultaneously. For example, the device may be extruding a first type of pasta product while dough for a second type of pasta product is being mixed simultaneously.

Lastly, it is also envisaged that in some embodiments, the device may include more than one mixing assembly, extrusion assembly and/or container and mixing and extrusion assembly thereby enabling the device to simultaneously produce multiple batches of pasta products.

As used herein, the term "pasta product" may include any non-cooked, non-dried fresh pasta foodstuff, such as, e.g., long pasta, short pasta, minute pasta, egg-based pasta or noodles.

The device may be of any suitable size, shape and construction and may be formed from any suitable material or materials. Generally, the device may be of a size and shape to be supported atop a bench, counter or table top.

Typically, the device may be formed of materials suitably adapted to be durable and withstand continuous operating conditions. The device may be formed of metal or plastic material or materials, or a combination thereof, for example.

As indicated, the device includes a base unit including a motor. The base unit may be configured to support device atop a support surface and preferably house the motor. The base unit may be of any suitable size, shape and construction.

The base unit may have a circular, rectangular, oblong or oval-shaped cross sectional shape, preferably rectangular.

The base unit may include a lower surface, an opposed upper surface and opposed side surfaces extending therebetween. Usually, the base unit may define a cavity for housing or at least partially housing the motor and other components of the device, preferably entirely housing the motor and other components of the device.

The lower surface may include one or more feet for supporting the device atop a supporting surface. The feet may be adjustable to level the device.

In some embodiments, the upper surface and one or more of the side surfaces may include one or more access panels so as to provide access to internal components of the device. The one or more access panels may be lockable so as to control access.

In some embodiments, the base unit may include one or more securing points for securing the device to a supporting surface, such as, e.g., a bench, counter or table top. In some such embodiments, the securing points may include one or more opening defined in the lower surface and/or side surface(s) for receiving a mechanical fastener therethrough for mechanically fastening the device to the supporting surface. The device may be directly or indirectly secured to the supporting surface.

The motor may be of any suitable type known in the art capable of applying torque to at least the one or more mixing elements of the mixing assembly and/or the at least one at conveyor screw. Typically, the motor may be an electric motor. The motor may draw power from an on-board power source, such as, e.g., one or more batteries, and/or may draw power from an external source, such as, e.g., a mains supply.

The mixing assembly may be of any suitable size, shape and construction for mixing at least flour and water together to produce a pasta dough.

In some embodiments, the assembly may include a container and one or more mixing elements configured to extend into and move within the container.

In other embodiments, device may include a container having a mixing portion including an inlet and an extrusion portion fluidly connected to the mixing portion and including an outlet end and a tubular section defining an internal bore extending from the mixing portion to the outlet end. In such embodiments, the container may be operatively associated with the mixing and extrusion assembly for mixing and extruding the pasta product through the container. In such embodiments, at least a portion of the at least one conveyor screw extending through the mixing portion of the container may include one or more mixing elements for mixing and moving contents received within the mixing portion of the container.

In some embodiments, the container may include a base wall, a rim and at least one sidewall extending upwardly from the base wall to the rim. In some such embodiments, the at least one sidewall may diverge outwardly from the base wall to the rim to provide the container with a bowl shape. In some such embodiments, the container may further include a cover or lid for at least partially covering an upper opening of the container.

In other embodiments, the container may include a base wall, a rim and at least one sidewall extending upwardly from the base to the rim. The rim may define an inlet for receiving contents into a mixing portion of the container. The container may further define the extrusion portion extending outwardly from a portion of the at the least one sidewall to the outlet end and defining the tubular section and internal bore extending therebetween.

The base wall, the rim and the at least one sidewall may define an internal mixing volume of the container, or a mixing portion of the container. The container, or the mixing portion of the container, may have any suitably sized mixing volume to provide one or more batches of the pasta product. For example, the container, or mixing portion of the container, may have a mixing volume of about 0.5L, about 1L, about 1.5L, about 2.0L, about 2.5L, about 3.0L, about 3.5L, about 4.0L, about 4.5L, about 5.0L, about 5.5L, about 6.0L, about 6.5L, about 7.0L, about 7.5L, about 8.0L, about 8.5L, about 9.0L, about 9.5L, about 10.0L, about 10.5L, about 11.0L, about 11.5L, about 12.0L, about 12.5L, about 13.0L, about 13.5L, about 14.0L, about 14.5L, about 15.0L, about 15.5L, about 16.0L, about 16.5L, about 17.0L, about 17.5L, about 18.0L, about 18.5L, about 19.0L, about 19.5L or even about 20.0L.

The one or more mixing elements may be of any suitable size, shape and construction to extend within and move relative to the container for mixing at least the flour and water dispensed into the container into pasta dough.

The one or more mixing elements may include an elongated hook, whisk, kneading member, blade, stirring rod, paddle or any combination thereof. The mixing elements may be of differing lengths.

In some embodiments, the one or more mixing elements may include a central hub removably attachable to a drive shaft of the motor for applying torque to the mixing elements. The drive shaft of the motor may extend upwards in a generally vertical orientation.

In some embodiments, the container may likewise be removably attachable to the base unit. The drive shaft may extend centrally through the base wall of the container into engagement with the one or more mixing elements. The one or more mixing elements maybe removably attachable to the drive shaft, preferably via the central hub. Typically, in such embodiments the one or more mixing elements may be configured to contact an inner surface of one or more of the base wall and the sidewall of the container.

In such embodiments, the base wall of the container may include a central opening configured to fit around and receive the drive shaft therethrough.

Suitably, the central hub of the one or more mixing elements and the central opening of the container may form a seal about the drive shaft to prevent the contents from leaking about the drive shaft and out of the container, preferably a fluid-tight seal.

In other embodiments, the at least one conveyor screw may extend through the mixing portion and the extruder portion of the container in a generally horizontal orientation. In such embodiments, the at least one conveyor screw may be attachable to a drive shaft of the motor at a first end. Optionally, the at least one conveyor screw may be rotatably coupled to the outlet end at an opposed second end. The at least one conveyor screw, or the drive shaft, may extend through an opening defined in the at least one sidewall of the container at a location aligning with the internal bore and the outlet end.

In some embodiments, the inner surface of the sidewall of the container, or the mixing portion of the container, may include one or more baffles protruding inwards into the mixing volume or mixing portion of the container. The one or more baffles together with the one or more mixing elements advantageously may enhance mixing of the contents.

In some embodiments, the mixing assembly further includes a mixing outlet for conveying a pasta dough formed therein to the extrusion assembly.

In other embodiments, the mixing portion further includes a mixing outlet adjoining the tubular section of the extrusion portion of the container.

The mixing outlet may be of any suitable size, shape and construction and formed in any suitable location.

The mixing outlet may be in fluid communication with an inlet end of the extrusion assembly, or the extrusion portion of the container.

For example, in some embodiments, the extrusion assembly, or extrusion portion, may be located adjacent to the mixing outlet so that pasta dough may be readily transferred to the extrusion assembly, or the extrusion portion, via the mixing outlet.

In other embodiments, the extrusion assembly may be located at least partially beneath the mixing outlet so that pasta dough may fall through the mixing outlet and into the extrusion assembly, preferably the inlet end.

In yet other embodiments, the mixing outlet may be in fluid communication with an extrusion inlet, typically via an internal passage. The extrusion inlet may be located at or near an inlet end of the extrusion assembly, or the extrusion portion.

In some embodiments, the mixing outlet may further include a sealing member to selectively seal the mixing outlet.

The sealing member may be movable between an open position in which pasta dough may flow from the container to the extrusion assembly and a closed position in which passage is prevented, preferably slidably moveable. The sealing member may be of any suitable size, shape and/or form, and may be formed from any suitable material or materials.

In some such embodiments, the sealing member may be in the form of plug locatable within the mixing outlet and moveable between the open and closed positions.

In other embodiments, the sealing member may form part of a valve to selectively seal the mixing outlet. For example, the valve may further include a valve seat located within or associated with the mixing outlet or a passage extending therefrom, a sealing member movable into or out of engagement with the valve seat and an actuating mechanism for moving the sealing member between the open and closed positions.

Movement of the sealing member by the actuating mechanism may be linear, although non-linear movement such as rotary movement is also envisaged.

In some embodiments, the sealing member or the valve may include an actuating mechanism in the form of an electromechanical solenoid for moving the sealing member between the open and closed positions.

In other embodiments, the actuating mechanism may include one or more servomechanisms operatively associated with the outlet end and including at least one servomotor.

The actuating mechanism may be electrically connected to a power source as previously described.

As indicated, the device includes a flour dispensing assembly for dispensing a selected volume of flour into the container.

The assembly may be of any suitable size, shape and construction and may be located in any suitable location relative to the mixing assembly, preferably at least partially above.

Generally, the flour dispensing assembly may include a flour container containing a source of flour, a chute having an inlet in fluid communication with the flour container and an opposed outlet in fluid communication with the container of the mixing assembly, or the mixing potion of the container, and a dispensing mechanism operatively associated with the inlet of the chute and configured to dispense flour out the chute, preferably a pre-defined volume of flour.

In use, the flour may flow under gravity from the flour container to the container of the mixing assembly via the chute.

The source of flour may include any suitable flour for making a pasta dough. For example, the flour may include wheat flour, semolina, barley flour, buckwheat flour, rye flour, rice flour, maize flour, chestnut flour, chickpea flour or any combination thereof. The source of flour may contain gluten containing flour or gluten-free flour.

The dispensing mechanism may include any suitable mechanism for controlling a flow of flour from the source of flour to the container of the mixing assembly.

For example, in some embodiments, the mechanism may include a sealing member and an actuating mechanism as previously described for moving the sealing member between the open and closed positions.

In other embodiments, the sealing member may form part of a valve including a valve seat in which the sealing member is moveable by way of an actuating mechanism between open and closed positions relative to the valve seat to selectively control a flow of flour into the container of the mixing assembly.

In other embodiments, the mechanism may include a dispensing wheel having paddle arms and configured to provide a pre-defined volume between adjacent arms. In such embodiments, an actuating mechanism may be used to rotate the dispensing wheel and meter out a selected volume of flour.

As indicated, the device includes a water dispensing assembly for dispensing a selected volume of water into the container of the mixing assembly.

Again, the assembly may be of any suitable size, shape and construction and may be located in any suitable location relative to the mixing assembly.

Generally, the water dispensing assembly may include a source of water and a water outlet connectable to the source of water and in fluid communication with the container of the mixing assembly, or the mixing portion of the container.

The water outlet is preferably connectable to the source of water by a passage. The passage may include a tube, pipe or hose.

In some embodiments, the water dispensing assembly may further include a valve to selectively control a flow of water from the source of water to the container.

Any suitable type of valve may be used. Typically, the valve may have a valve seat located within or associated with the water outlet or the passage, a sealing member moveable into and out of engagement with the valve seat and an actuating mechanism for selectively moving the sealing member between open and closed positions.

The actuating mechanism may be as previously described and may preferably draw power from a power source as previously described.

In some embodiments, the source of water may be a mains water supply.

In other embodiments, the source of water may be a water container mounted to the base unit. In such embodiments, the water dispensing assembly may further include a pump for pumping a selected volume of water to the container via the water outlet. The pump may be associated with the passage. Typically, the pump may be an electric pump. The pump may preferably draw power from the same source as the motor.

As indicated, in some embodiments the device may include an egg/water dispensing assembly for interchangeably dispensing egg or water into the mixing portion of the container. In such embodiments, the assembly may include a source of egg or water, an outlet and a pump for pumping a selected volume of egg or water to the container via the outlet. In such embodiments, the source may preferably include a container mounted to the base unit containing water or liquid eggs.

As indicated, the device includes an additive dispensing assembly including one or more sources of additives and one or more dispensing mechanisms for dispensing selected volumes or quantities of one or more of the additives. Depending on the additive, the additive dispensing assembly may dispense the additives into the container or into the extrusion assembly.

The additive dispensing assembly may be of any suitable size, shape and construction.

Generally, the one or more additives may include eggs or egg extract, oil, salt and one or more flavourings.

The eggs may be pasteurised or non-pasteurised whole fresh eggs or homogenised eggs. The egg extract may be liquid or dry extract. Likewise, the one or more flavouring may be liquid or dry flavourings.

In embodiments in which the additive include whole eggs, the dispensing assembly may include a source of eggs and a dispensing mechanism include an egg dispenser configured to sequentially dispense eggs and an egg cracker for cracking the egg over the container of the mixing assembly, or the mixing portion of the container.

In some such embodiments, the dispensing mechanism may further include a separator for separating egg yolk and egg white of cracked eggs. The separator may enable the dispensing mechanism to dispense selected volumes or quantities of egg yolk and/or egg white into the container of the mixing assembly, or the mixing portion of the container.

In embodiments in which the additive includes homogenised eggs or liquid egg extract, the dispensing assembly may include a container containing the homogenised eggs or liquid egg extract, an outlet in fluid communication with the container of the mixing assembly, or the mixing portion of the container, a passage extending therebetween and a dispensing mechanism for controlling a flow of homogenised eggs or liquid egg extract into the container, preferably for controlling a flow of a selected volume of homogenised eggs or liquid egg extract into the container. In such embodiments, the dispensing mechanism may be a valve and/or a pump as previously described.

In some such embodiments, the additive may include liquid egg yolk and/or liquid egg white. In such embodiments, the dispensing assembly may include a container containing the liquid egg yolk and/or liquid egg white, an outlet in fluid communication with the container of the mixing assembly, or the mixing portion of the container, a passage extending therebetween and a dispensing mechanism for controlling a flow of liquid egg yolk and/or liquid egg white into the container, preferably for controlling a flow of a selected volume of liquid egg yolk and/or liquid egg white into the container. In such embodiments, the dispensing mechanism may be a valve and/or a pump as previously described.

In embodiments in which the additives include salt or dry egg extract, the dispensing assembly may include a source of the salt or extract, a chute having an inlet in fluid communication with the source and an opposed outlet in fluid communication with the container of the mixing assembly, or the mixing portion of the container, and a dispensing mechanism operatively associated with the inlet of the chute and configured to dispense salt or dry egg extract out the chute, preferably a pre-defined volume of salt or dry egg extract.

In embodiments in which the additives include one or more dry flavourings, the dispensing assembly may include a source of the flavourings, a chute having an inlet in fluid communication with the source and an opposed outlet in fluid communication with the container of the mixing assembly, the extrusion assembly, the mixing portion of the container, or the extrusion portion of the container, and a dispensing mechanism operatively associated with the inlet of the chute and configured to dispense the flavourings out the chute, preferably a pre-defined volume of the flavourings.

The dispensing mechanism may include any suitable mechanism for controlling a flow of salt, dry egg extract or flavouring from the source to the container of the mixing assembly or the extrusion assembly, such as, e.g., as previously described in respect of the flour dispensing assembly. In some embodiments, the dispensing mechanism may include a grinding function for grinding a portion of a source of the one or more dry ingredients or flavourings.

In embodiments in which the additives include oil, the dispensing assembly may include a container containing the oil, an outlet in fluid communication with the container of the mixing assembly, or the mixing portion of the container, a passage extending therebetween and dispensing mechanism for controlling a flow of oil into the container, preferably for controlling a flow of a selected volume of oil into the container. In such embodiments, the dispensing mechanism may include a pump and/or a valve as previously described.

In embodiments in which the additives include a liquid egg extract or one or more liquid flavourings, the dispensing assembly may again include a source of the extract or flavourings, an outlet in fluid communication with the container of the mixing assembly, the extrusion assembly, the mixing portion of the container, or the extrusion portion of the container, and a passage in fluid communication with the outlet and the source via a dispensing mechanism for dispensing a selected volume of the liquid egg extract or one or more liquid flavourings.

Again, in such embodiments, the dispensing mechanism may include a pump and/or a valve as previously described for selectively controlling a flow of the liquid egg extract or one or more liquid flavourings.

In embodiments in which the one or more additives include liquid or dry flavourings, the one or more additives may preferably be dispensed into the extrusion assembly, or the extrusion portion of the container, so as to not contaminate the container of the mixing assembly, or the mixing portion of the container.

In some embodiments, the one or more additives may include vitamins, minerals, supplements and/or therapeutic agents configured to be selectively dispensed into the container of the mixing assembly, the extrusion assembly, the mixing portion of the container or the extrusion portion of the container for mixing with the pasta dough.

In some embodiments, the one or more additives may be provided in pod sealed capsules.

The pod sealed capsules may be of any suitable size, shape and construction and formed from any suitable material or materials capable of containing dry or liquid additives in an air-tight environment.

In such embodiments, the dispensing assembly may include a pod receptacle for receiving a selected pod sealed capsule, a piercing structure for piercing the pod sealed capsule and an actuating mechanism for pressing the selected pod sealed capsule against the piercing structure and dispensing contents of the selected pod sealed capsule into the container of the mixing assembly or the extrusion assembly.

In some such embodiments, the pod sealed capsules may further include one or more RFID tags or labels for verification purposes. Specifically, the one or more RFID tags or labels may be used to verify that a pod sealed capsule is a genuine or authentic capsule. In such embodiments, the device may further include a RFID tag or label reader.

As indicated, in some embodiments, the device includes an extrusion assembly for forming a pasta product from the pasta dough. In other embodiments, the device includes an extrusion portion defined by the container and a mixing and extrusion assembly operatively associated therewith.

The extrusion assembly may be of any suitable size, shape and configuration.

Typically, the extrusion assembly may include an elongate tubular section having an inlet end, an opposed outlet end, an internal bore extending longitudinally therebetween and at least one conveyor screw located therein and axially rotatable relative thereto so as to convey a pasta dough received in the inlet end via the mixing outlet to form the pasta product at the outlet end via a die unit operatively associated therewith.

Likewise, the extrusion portion may include an elongate tubular section having an inlet end, an opposed outlet end and an internal bore extending longitudinally therebetween. The at least one conveyor screw of the mixing and extrusion assembly may be located in the container and extend through both the mixing portion and the extrusion portion and be axially rotatably relative thereto so as to mix pasta dough in the mixing portion and convey the mixed said dough through the extrusion portion to form the pasta product at the outlet end via the die unit operatively associated therewith.

Typically, at least the inlet end of the elongate tubular section may be located adjacent the mixing outlet so that the pasta dough may transfer into the inlet end.

In other such embodiments, the inlet end may be located at least partially beneath the mixing outlet, preferably such that the pasta dough may transfer under the force of gravity from the mixing outlet to the inlet end of the extrusion assembly. In such embodiments, the inlet end may include at least an upper opening for receiving the pasta dough therethrough.

In some embodiments, the inlet end may include an extrusion inlet in fluid communication with the mixing outlet, typically via an internal passage as previously described.

The conveyor screw may be of any suitable size, shape and construction. The screw may include an inlet end couplable to the motor, an opposed outlet end optionally rotatably coupled to the outlet end of the tubular section, an elongate central shaft extending therebetween and at least one helical spiral flange extending at least partially along a length of the central shaft configured to mix and/or convey the pasta dough towards the outlet end as the screw is rotated.

The inlet end may be directly or indirectly couplable to the drive shaft of the motor. If indirectly coupled, the inlet end may be coupled via a bridging component, such as, e.g., one or more gears, cog wheels or belts.

In some embodiments, an internal surface of the tubular section may include at least one internal helical spiral flange extending at least partially along a length of the section and configured to intercalate with the at least one helical spiral flange of the screw.

In some embodiments, an outlet end portion of the tubular section may converge towards the die unit to enhance pressure on the pasta dough as it is conveyed towards the die unit. The screw may have a complementary-shaped frustoconical outlet end portion.

In embodiments in which the device includes a mixing and extrusion assembly, a rotational direction of the at least one conveyor screw may be reversed one or more times to prevent the pasta dough from being conveyed to the extrusion portion until it has reached a desired consistency.

The die unit operatively associated with the outlet end of the tubular section may have a plurality of openings defined therein configured to create a pressure drop across the die opening during the extrusion process and shape the pasta dough into the pasta product as it is forced through selected die openings.

Typically, the die unit may have different sized and shaped openings corresponding to different pasta product types.

Selected die openings may be moved and aligned relative to the outlet end, preferably by an actuating mechanism.

Movement of the die unit by the actuating mechanism may be linear, although non-linear movement such as rotary movement is also envisaged.

In some embodiments, the actuating mechanism may be in the form of an electromechanical solenoid for moving the unit die back and forth relative to the outlet end of the tubular section.

In other embodiments, the actuating mechanism may include one or more servomechanisms operatively associated with the outlet end and including at least one servomotor.

In yet other embodiments, the die unit may be slidably moveable across the outlet end of the tubular section by way of a rack and pinion system. The outlet end may include one or more racks extending along a length or height of the end and the die unit may include one or more pinions each engageable with a corresponding rack for slidably moving the die unit relative to the outlet end. Each rack and pinion may be engageable in such a way that allows movement of the die unit along the length or height of the outlet end without lateral movement or separation of the die unit away from the outlet end.

The actuating mechanism may be electrically connected to a power source as previously described.

In some embodiments, the die unit may further include at least one blade for severing a pasta product extruded through the die unit. The at least one blade may be moved relative to the die unit, or together with the die unit, by an actuating mechanism.

Again, movement of the at least one blade by the actuating mechanism may be linear, although rotary movement is also envisaged.

The actuating mechanism may be as previously described.

In some embodiment, the die unit may include a pair of discs operatively associated with, and configured to rotate relative to, the outlet end of the extrusion assembly or the extrusion potion. The discs may be arranged in a parallel arrangement relative to each other and may be configured to independently rotate relative to each other. An innermost disc located closest the outlet end may have differently sized and shaped openings defined thereon corresponding to different pasta types. The outermost disc may include at least one opening for allowing the pasta product to be extruded therethrough and the at least one blade for severing the pasta product being extruded once a desired quantity has been dispensed.

As previously mentioned, the pair of discs may be selectively rotated relative to the outlet end by an actuating mechanism as previously described.

In some embodiments, the extrusion assembly may further include a cleaning apparatus for cleaning the extrusion assembly between batches, after a predefined number of batches or at the end of day of operation.

In some embodiments, the cleaning apparatus may be of any suitable size, shape and construction to fit within the tubular section of the extrusion assembly and remove residual pasta dough from the conveyor screw and/or an internal surface of the tubular section.

In some such embodiments, the cleaning apparatus may include a cylindrical sleeve sized and shaped to move at least partially along a length of the at least one conveyor screw and the tubular section and scrape residual pasta dough. The cylindrical sleeve may include at least one helical spiral groove extending at least partially along a length of an inner surface of the cylindrical sleeve and configured to complementarily receive at least part of the at least one helical spiral flange extending outwardly from the at least one conveyor screw.

In other embodiments, the cleaning apparatus may include a pressurised source of cleaning fluid and one or more nozzles each for directing pressurised cleaning fluid within the container and/or tubular section for removing residual pasta dough and materials from the mixing assembly, the extrusion assembly, the mixing portion and/or the extrusion portion. The cleaning fluid may typically include water optionally with a detergent or anti-microbial agent added. Fluid may preferably be pressurised by an operatively associated pump.

In yet other embodiments, the cleaning apparatus may include one or more nozzles and a source of steam for directing the steam within the container, tubular section and/or die unit for removing residual pasta dough and pasta product.

In some embodiments, the device may further include a flour dusting unit operatively associated with the die unit for dusting the pasta product as it emerges from the die unit with flour. Advantageously, dusting the pasta product with flour prevents it from sticking together, particularly if allowed to collect in a container positioned beneath the die unit.

The flour dusting unit may be of any suitable size, shape and construction known in the art. For example, in some embodiments, it is envisaged that the flour dusting unit may include a fan configured to disperse a selected volume of flour over the pasta product and/or assist in at least partially drying the pasta product. In some embodiments, a heating element may be operatively associated with the fan to enhance a drying effect.

Typically, the device may further include a packaging assembly operatively associated with the outlet end of the extrusion assembly and configured to receive and package the pasta product as it emerges from the outlet end.

The packaging assembly may be of any suitable size, shape and configuration.

Usually, the packaging assembly may be configured to package the pasta product into a container selected from a produce container or bowl. The produce container may include a base and a lid. Preferably, the produce container may be sealable once filled with the pasta product.

The assembly may include a source of containers and a handling system for separating and individually packaging containers with produce. The handling system may be of any suitable size, shape and form. Generally, the handling system may include at least one arm for holding and positioning a product container relative to the die unit, the packaging assembly and a customer pick-up point.

The source of containers may include a nested container arrangement. The at least one arm of the handling system may be configured to select and retrieve an individual product container from the nested container arrangement.

In some embodiments, the handling system may be configured to close or seal a lid on the base of the produce container.

In some embodiments, the packaging assembly may further include a labelling system for labelling a packaged container. Each label may include a name of a user, i.e., customer, the order type and the cost. In some such embodiments, each label may further include nutritional information concerning the desired pasta product dispensed. In some such embodiments, each label may further include a barcode or QR code.

The device preferably includes a controller for controlling operation of the device, including at least one or more of the mixing assembly, the extrusion assembly, the mixing and extrusion assembly, the various dispensing assemblies, the handling system, the packaging assembly and the labelling system.

The controller may be part of a microcomputer, including one or more processors and a memory. The processors may include multiple inputs and outputs coupled to the electronic components of the device.

In some embodiments, the microcomputer may be electrically connected to the electronic components of the device.

In other embodiments, the microcomputer may be remotely connected to the device by a wireless communications module connected to the electronic components of the device.

The device may preferably include a wireless communications module in the form of a wireless network interface controller, such that the device may connect to an external processing devices, sensors, infrastructure and/or at least one remotely accessible server via a wireless network (e.g., Wi-Fi (WLAN) communication, Satellite communication, RF communication, infrared communication, or Bluetooth^{™}).

In some embodiments, the wireless communications module may enable the device to wirelessly connect to multiple external processing devices and infrastructure. For example, in some such embodiments, it is envisaged that the device may wireless connect to at least one remotely accessible server for communication of stock levels, machine faults and runtime as well as for software and firmware updates.

In some embodiments, the device may wirelessly connect to computing devices, such as, e.g., a laptop or a desktop. In such embodiments, software may be provided to be run on the computing device and enable a user to interact with and control operation of the device.

In other embodiments, the device may wirelessly connect to mobile computing device, such as, e.g., a smart phone, a tablet, or a smart watch. In such embodiments, the microcomputer may include software in the form of an application (i.e., an app) configured to run on the mobile computing device and allow a user to interact with and control operation of the device.

In some embodiments, the controller may interact with the motor to monitor the mixing assembly, preferably monitor when the mixed contents have reached a desired consistency indicative of pasta dough.

For example, in some such embodiments, the controller may monitor and detect an electrical load applied to the motor connected to the one or more mixing elements and the rate of rotation when a constant electrical load is detected indicative of a homogenous and desired consistency. The controller may be configurable to input a constant load indicative of a desired consistency.

In other such embodiments, the device may further include one or more rotary sensors for measuring the torque produced by the motor in response to the load applied to the rotating shaft by the mixing of the pasta dough. The controller may monitor the one or more rotary sensors thereby enabling the device to autonomously determine a consistency of the pasta dough based on motor load. Advantageously, the one or more rotary sensors may ensure that the pasta dough has reached a desired consistency for making the pasta product. In use, the controller may contain the pasta dough in the container of the mixing assembly or the mixing portion of the container until the desired consistency is reached. In embodiments including the mixing and extrusion assembly, this may be achieved by reversing a rotational direction of the at least one conveyor screw to prevent the pasta dough from being conveyed into the extrusion portion.

As indicated, in some embodiments, the device may include one or more sensors operatively associated with the container, or the mixing portion of the container, for measuring selected volumes of flour and water and the one or more additives dispensed into the container.

The one or more sensors may be of any suitable size, shape and form.

Generally, the one or more sensors may include at least one load cell on which the container, or the mixing portion of the container, can rest and act on to measure a weight of the flour, water and one or more additives dispensed into the container.

The at least one load cell may be of any suitable type to measure the weight of the flour, water and the one or more additives. For example, the at least one load cell may be a strain gauge load cell, a piezoelectric load cell, a hydraulic load cell or a pneumatic load cell, preferably a strain gauge load cell.

The at least one load cell may be supported or contained within the base unit of the device and be operatively associated with the container, or mixing portion of the container, in any suitable way such that the container, or the mixing portion of the container, may act on the at least one load cell to measure the weight of the ingredients dispensed.

Typically, the at least one load cell is located within the base unit and has a load receiving end located at or near an upper end of the base unit upon which the container, or the mixing portion of the container, may act.

The at least one load cell may be in communication with the controller for determining a selected volume by weight of flour, water and/or one or more of the additives to be dispensed into the container of the mixing assembly.

In some embodiments, one or more of the flour container, the water container (if present), and the sources of additives may include one or more sensors for monitoring a volume of contents in the respective containers or sources. Any suitable type of sensor may be used as is known in the art.

The one or more sensors may be in communication with the controller and the controller may issue one or more alerts and/or isolate operation of the device when a respective container or source contains an insufficient volume or quantity for a pasta production run.

In some embodiments, one or more of the outlets in fluid communication with the container of the mixing assembly or passages extending therefrom may include one or more flowmeters for measuring a flow of contents, preferably water and/or liquid additives into the container. Again, any suitable type of flowmeter may be used as is known in the art.

The one or more flowmeters may be in communication with the controller for determining a selected volume of the water and/or liquid additives to be dispensed into the container of the mixing assembly.

In some embodiments, the packaging assembly may further include at least one load cell in communication with the controller for determining a weight of the pasta product extruded into the container. Upon determining that a required weight of pasta product has been dispensed into the container, the controller may activate the at least one blade to sever the pasta product being extruded. Additionally, and/or alternatively, the controller may pause the at least one conveyor screw to prevent further pasta product from being extruded.

As indicated, in some embodiments, the device may include a user interface to allow a user to input a desired pasta product to be produced, including a desired quantity.

The user interface may be defined in the upper and/or one or more of the side surfaces of the base unit for interacting with and controlling operation of the device.

The interface may include at least one display operatively connected to the controller for displaying operational information, such as, e.g., pasta type, pasta amount, flavour options, health/lifestyle goal, and expected run time.

The display may be a liquid-crystal display ("LCD"), a plasma display or a light-emitting diode ("LED") display, preferably the latter.

In some such embodiments, the interface may include a keypad or touchpad including one or more keys or buttons for controlling various aspects of functionality of the device.

In other such embodiments, the at least one display may include a touchscreen allowing a user to interact with and control various aspects of functionality of the device.

In yet other embodiments, the user interface may be provided by way of software configured to be run on a user's computing device, such as, e.g., a computing device or a mobile computing device. In such embodiments, the user may interact with the device via an app run on his or her personal computing device. In such embodiments, the at least one display may confirm an order and/or display an expected run time. In some such embodiments, the controller of the device may communicate with the app to alert a user when his or her order is complete and ready to be picked up.

According to a sixth aspect , there is provided a method of producing a pasta product with the device of the first or second aspect, said method including:
inputting a desired pasta product to be produced;
dispensing selected volumes of flour, water and optionally one or more additives into a container of the mixing assembly or the extrusion assembly;
mixing the selected volumes dispensed into the container to produce a pasta dough;
transferring the pasta dough into the inlet end of the extrusion assembly via the mixing outlet; and
axially rotating the at least one conveyor screw of the extrusion assembly to extrude the pasta dough into the desired pasta product,
wherein a controller of the device, responsive to receiving said inputting, autonomously controls said dispensing, said mixing, said transferring and said rotating to produce the desired pasta product.

According to a seventh aspect, there is provided a method of producing a pasta product with the device of the third aspect, said method including:
inputting a desired pasta product to be produced;
dispensing selected volumes of flour, water and optionally one or more additives into a mixing portion of the container of the device;
axially rotating the at least one conveyor screw of the mixing and extrusion assembly to mix the selected volumes dispensed in the mixing portion to product a pasta dough and extrude the pasta dough through the extrusion portion to form the desired pasta product,
wherein a controller of the device, responsive to receiving said inputting, autonomously controls said dispensing and said rotating to produce the desired pasta product.

According to an eight aspect, there is provided a method of producing a pasta product with the device of the fourth aspect, said method including:
inputting a desired pasta product to be produced;
dispensing selected volumes of flour, egg or water and optionally one or more additives into a container of the mixing assembly or the extrusion assembly;
mixing the selected volumes dispensed into the container to produce a pasta dough;
transferring the pasta dough into the inlet end of the extrusion assembly via the mixing outlet; and
axially rotating the at least one conveyor screw of the extrusion assembly to extrude the pasta dough into the desired pasta product,
wherein a controller of the device, responsive to receiving said inputting, autonomously controls said dispensing, said mixing, said transferring and said rotating to produce the desired pasta product.

According to a ninth aspect, there is provided a method of producing a pasta product with the device of the fifth aspect, said method including:
inputting a desired pasta product to be produced;
dispensing selected volumes of flour, egg or water and optionally one or more additives into a mixing portion of the container of the device;
axially rotating the at least one conveyor screw of the mixing and extrusion assembly to mix the selected volumes dispensed in the mixing portion to product a pasta dough and extrude the pasta dough through the extrusion portion to form the desired pasta product,
wherein a controller of the device, responsive to receiving said inputting, autonomously controls said dispensing and said rotating to produce the desired pasta product.

The methods may include one or more features or characteristics of the device as hereinbefore described.

The selected volumes or quantities dispensed correspond to a volume required to produce a selected batch size and/or type of pasta product. The required volumes are determined by the controller based on the selected input of a user via the user interface.

The mixing may be undertaken until the controller determines that the pasta dough has achieved a desired consistency. This may be determined by monitoring an electrical load of the motor or with the use of one or more rotational sensors.

Responsive to the pasta dough achieving a desired consistency, the pasta dough may be transferred to the extrusion assembly via the mixing outlet, or the extrusion portion.

In some embodiments, responsive to the pasta dough achieving a desired consistency, the controller may open the mixing outlet and the one or more mixing elements may continue to rotate to push or urge the pasta dough to exit the container via the mixing outlet.

In other embodiments, responsive to the pasta dough achieving a desired consistency, the controller may cease repeatedly reversing a rotational direction of the at least one conveyor screw so as to enable the pasta dough to be conveyed to the extrusion portion of the container.

In some embodiments, the axially rotating may further include selectively moving and aligning a desired die opening of the die unit relative to the outlet end of the extrusion assembly so that a desired pasta product is formed.

In some embodiments, the method further includes receiving and packaging the pasta product at it emerges from the die unit located at the outlet end of the extrusion assembly.

The receiving and packaging may further include labelling a container in which the pasta product is packaged.

The reference to any prior art in this specification is not and should not be taken as an acknowledgement or any form of suggestion that the prior art forms part of the common general knowledge.

### BRIEF DESCRIPTION OF DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of Invention in any way. The Detailed Description will make reference to a number of drawings as follows:
Figure 1 is a schematic showing a pasta product production device according to an embodiment of the present invention;
Figure 2 is a schematic showing a pasta product device according to another embodiment of the present invention;
Figure 3 is an upper front perspective view of the device according to another embodiment of the present invention;
Figure 4 is a flowchart showing steps in a method of producing a pasta product according to an embodiment of the present invention; and
Figure 5 is a flowchart showing steps in a method of producing a pasta product according to another embodiment of the present invention.

### DETAILED DESCRIPTION

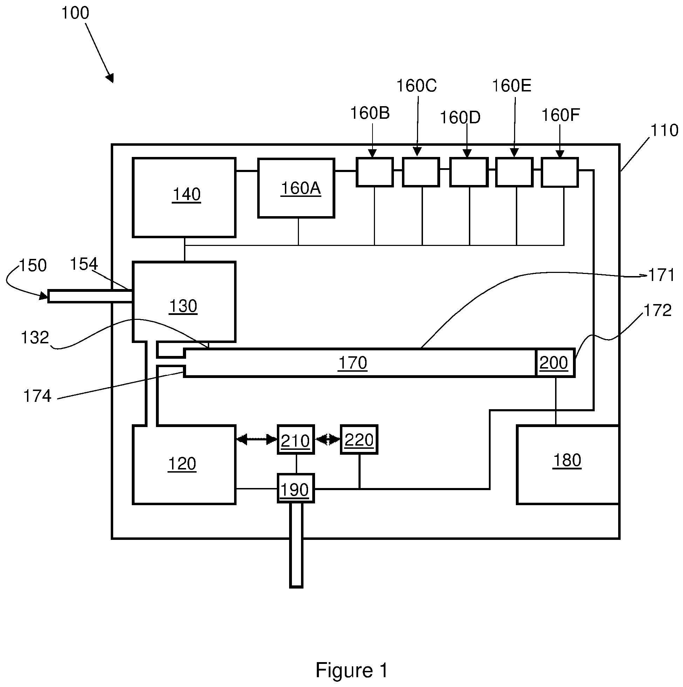

Figures 1 to 3 show a pasta product production device (100) according to various embodiments of the present invention for the on demand production of a pasta product in a timely manner.

Referring to Figure 1, in this first embodiment, the device (100) includes a base unit (110), a motor (120), a mixing assembly (130) operatively associated with the motor (120), a flour dispensing assembly (140) for dispensing a selected volume of flour, a water dispensing assembly (150) for dispensing a selected volume of water; an additive dispensing assemblies (160) for respectively dispensing six different types of additives, an extrusion assembly (170) operatively associated with the motor (120) for extruding a pasta product, and a packaging assembly (180) operatively associated with an outlet end (172) of the extrusion assembly (170) and configured to receive and package the pasta product as it emerges from the outlet end (172).

The device (100) is intended for producing a selected fresh pasta product in a timely manner and on demand. It is envisaged that the device (100) will produce a selected pasta product in a period ranging from about 5mins to about 20mins.

The device (100) is of a size and shape to be supported atop a bench, counter or table top, or the like.

The device (100) is formed of durable materials suitably adapted to withstand continuous operating conditions.

The base unit (110) is configured to support the device (100) atop the support surface and house the motor (120) and at least partially house other components of the device (100).

The base unit (110) has a generally rectangular shape. The base unit (110) includes a lower surface (112), an opposed upper surface (114) and opposed side surfaces (116).

The motor (120) is an electric motor and draws power from an external power source, such as, e.g., a mains supply, distributed via an on board power supply distribution circuit (190).

The mixing assembly (130) includes a container and one or more mixing elements configured to extend into and move within the container for mixing at least flour and water together to produce a pasta dough.

The container includes a base wall, a rim and at least one sidewall extending upwardly from the base wall to the rim.

The base wall, the rim and the at least one sidewall may define an internal mixing volume of the container ranging between about 3.0L and about 15.0L.

The one or more mixing elements include a central hub removably attachable to a drive shaft of the motor (120) for applying torque to the mixing elements. The drive shaft of the motor (120) extends upwards in a generally vertical orientation. The container is likewise removably attachable to the base unit (110). The drive shaft extends centrally through the base wall of the container into engagement with the one or more mixing elements.

The mixing assembly (130) further includes a mixing outlet (132) for conveying a pasta dough formed therein to the extrusion assembly (170).

The mixing outlet (132) is in fluid communication with an inlet end (174) of the extrusion assembly (170) so that the pasta dough exits through the mixing outlet (132) and into the extrusion assembly (170).

The mixing outlet (132) further includes a sealing member to selectively seal the mixing outlet (132). The sealing member is selectively moved between the open and closed positions by an actuating mechanism. In use, the sealing member is moved to the open position when the pasta dough reaches a desired consistency in the mixing assembly (130).

The actuating mechanism is electrically connected to the power source via the on board power supply distribution circuit (190) as previously described.

The flour dispensing assembly (140) is configured to dispense a selected volume of flour into the container of the mixing assembly (130).

Generally, the flour dispensing assembly (140) is located at least partially above the container of the mixing assembly (130) so that dispensed flour may flow under the force of gravity into the container.

The flour dispensing assembly (140) includes a flour container for containing a source of flour, a chute having an inlet in fluid communication with the flour container and an opposed outlet in fluid communication with the container of the mixing assembly (130) and a dispensing mechanism operatively associated with the inlet of the chute and configured to dispense a pre-defined volume of flour out of the chute.

The flour container may contain any suitable flour for making pasta dough. The flour may include wheat flour, semolina, barley flour, buckwheat flour, rye flour, rice flour, maize flour, chestnut flour, chickpea flour or any combination thereof.

The dispensing mechanism includes a dispensing wheel having paddle arms and configured to provide a pre-defined volume between adjacent arms. An actuating mechanism is used to rotate the dispensing wheel and meter out a selected volume of flour. The actuating mechanism is electrically connected to the power source via the on board power supply distribution circuit (190) as previously described.

The water dispensing assembly (150) is configured to dispense a selected volume of water into the container of the mixing assembly (130).

The water dispensing assembly (150) includes a water outlet (152) in fluid communication with the container of the mixing assembly (130) and a valve (154) for selectively controlling a flow of water from a mains water supply. The valve (154) is a solenoid valve electrically connected to the power source via the on board power supply distribution circuit (190) as previously described.

The additive dispensing assemblies (160) includes six different types of additives.

In some embodiments, the additives are configured to be selectively dispensed into the container of the mixing assembly (130) via respective dispensing mechanisms. The respective dispensing mechanisms are configured to dispense selected volumes of each of the additives into the container.

In other embodiments, the additives are configured to be selectively dispensed into the extrusion assembly (170) via respective dispensing mechanisms. The respective dispensing mechanisms are configured to dispense selected volumes of each of the additives into the extrusion assembly (170).

One of the additives includes whole fresh eggs. The respective additive dispensing assembly (160A) includes a source of whole eggs and a dispensing mechanism configured to sequentially dispense, crack and release the contents of the eggs over the container of the mixing assembly (130).

The other additives includes different liquid flavourings and liquid sauces. The respective additive dispensing assemblies (160B, 160C, 160D, 160E, 160F) each include a container containing the respective liquid flavouring and/or sauce, an outlet in fluid communication with the extrusion assembly (170) and a dispensing mechanism in the form of a pump for pumping a selected volume of the respective liquid flavouring and/or sauce into the extrusion assembly (170) via the outlet.

The extrusion assembly (170) includes an elongate tubular section (171) having an inlet end (174), an opposed outlet end (172), an internal bore extending longitudinally therebetween and a conveyor screw located therein and axially rotatable relative thereto so as to convey a pasta dough received in the inlet end (174) via the mixing outlet (132) to form as pasta product at the outlet end (172) via a die unit (200) operatively associated with the outlet end (172).

The screw includes an inlet end couplable to the motor (120), an opposed outlet end rotatably coupled to the outlet end (172) of the tubular section (171), an elongate central shaft extending therebetween and at least one helical spiral flange extending at least partially along a length of the central shaft configured to convey the pasta dough towards the outlet end (172) as the screw is rotated.

The inlet end (174) is indirectly couplable to the drive shaft of the motor (120) via a bridging component, such as, e.g., one or more gears, cog wheels or belts.

The die unit (200) operatively associated with the outlet end (172) of the tubular section (171) has a plurality of openings defined therein and configured to create a pressure drop across the die openings during the extrusion process and shape the pasta dough into the pasta product as it is forced through selected die openings.

The die unit (200) has different sized and shaped openings corresponding to different pasta product types. Selected die openings are moved and aligned relative to the outlet end (172) by an actuating mechanism. The actuating mechanism is electrically connected to the power source via the on board power supply distribution circuit (190) as previously described.

The packaging assembly (180) operatively associated with the outlet end (172) of the extrusion assembly (170) is configured to receive and package the pasta product as it emerges from the outlet end (172).

The packaging assembly (180) packages the pasta product into a container selected from a produce container or bowl. The assembly (180) includes a source of containers and a handling system for separating and individually packaging containers with the pasta product.

The packaging assembly (180) further includes a labelling system for labelling a packaged container. Each label may include a name of a user, i.e., customer, the order type and the cost. In some such embodiments, each label may further include a barcode or QR code.

The device (100) further includes a controller (210) for controlling operation of the device (100), including at least the mixing assembly (130), the extrusion assembly (170) the various dispensing assemblies (140, 150, 160) and the packaging assembly (180).

The controller (210) is part of a microcomputer, including one or more processors and a memory. The microcomputer is electrically connected to the electronic components of the device (100).

The device (100) further includes an interface defined in the base unit (110) to enable a user to interact with the controller (210) of the device (100) and control various aspects of functionality of the device (100).

The interface includes at least one display and a touchscreen.

The device (100) further includes a wireless communications module (220) connected to the controller (210) of the device (100) to enable a user to remotely interact with the controller (210) and for the controller (210) to remotely interact with other external processing devices, such as, e.g., for fault reporting and stock and usage updates.

The wireless communications module (220) may be in the form of a wireless network interface controller, such that the device (100) via the controller (210) may connect to a remote computing device via a wireless network (e.g., Wi-Fi (WLAN) communication, Satellite communication, RF communication, infrared communication, or Bluetooth^{™}).

A user can remotely interact with the controller (210) of the device (100) with a computing device, such as, e.g., a laptop or a desktop. In such instances, software may be provided to be run on the computing device and enable the user to interact with and control operation of the device (100).

Likewise, a user can remotely interact with the controller (210) of the device (100) using a mobile computing device, such as, e.g., a smart phone, a tablet, or a smart watch. In such instances, software in the form of an application (i.e., an app) and configured to run on the mobile computing device enables the user to interact with and control operation of the device (100).

Other than enabling a user to interact with the device (100), the controller (210) interacts with the motor (120) to monitor the mixing assembly (130), specifically when the mixed contents have reached a desired consistency indicative of pasta dough.

In such scenarios, the controller (210) monitors and detects an electrical load applied to the motor (120) connected to the one or more mixing elements and the rate of rotation when a constant electrical load is detected indicative of a homogenous and desired consistency. The controller (210) is configurable to input a constant load indicative of the desired pasta dough consistency.

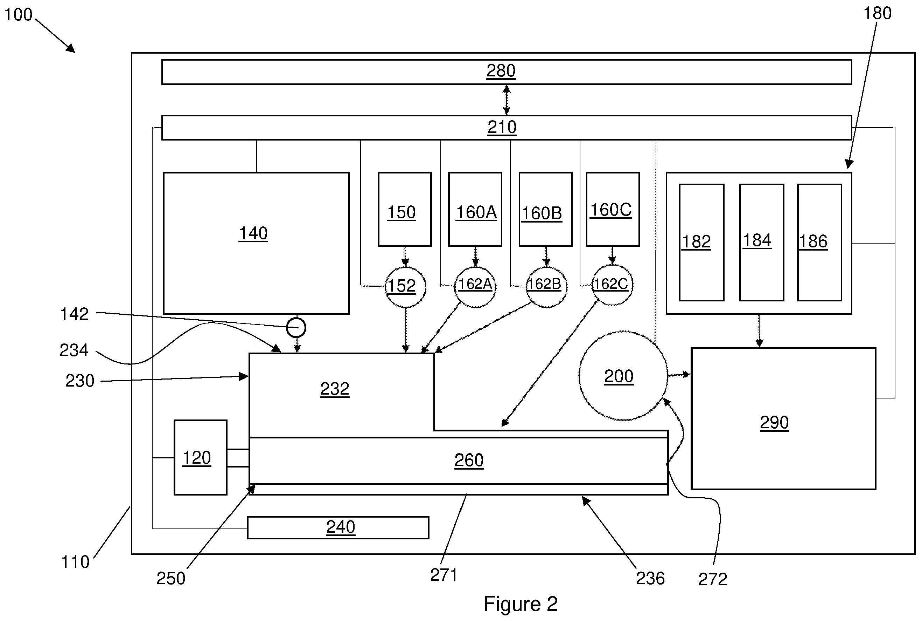

Figure 2 shows a second embodiment of the device (100). For convenience, features that are similar or correspond to features of the first or second embodiments will be referenced with the same reference numerals.

In this embodiment, the device (100) includes a base unit (110), a motor (120), a container (230) having a mixing portion (232) including an inlet (234) and an extrusion portion (236) fluidly connected to the mixing portion (232) and including an outlet end (272) and a tubular section (271) defining an internal bore extending from the mixing portion (232) to the outlet end (272); a flour dispensing assembly (140); a water dispensing assembly (150), three additive dispensing assemblies (160A, 160B, 160C); one or more sensors (240) including at least one load cell operatively associated with the mixing portion (232) for measuring selected volumes of flour, water and the one or more additives dispensed into the mixing portion (232); and a mixing and extrusion assembly (250) operatively associated with the motor (120) and the container (230).

The assembly (250) includes a die unit (200) operatively associated with the outlet end (272) and at least one conveyor screw (260) located within the container (230) and extending through the mixing portion (232) and along the internal bore of the extrusion portion (236) to the outlet end (272).

In use, the screw (260) is configured to be rotatable relative to the container (230) so as to mix contents received in the mixing portion (232) via the inlet (234), convey a mixed said contents to the extrusion portion (236) and extrude a pasta product at the outlet (272) via the die unit (200).

The device (100) further includes a user interface (280) to allow a user to input a desired pasta product to be produced; a controller (210) operatively associated with the user interface (280) and the one or more sensors (240) and configured to autonomously control operation of the motor (120), the mixing and extrusion assembly (250), the flour dispensing assembly (140), the water dispensing assembly (150) and the additive dispensing assemblies (160A, 160B) to produce the desired pastas product.

Moreover, the device (100) includes a packaging assembly (180) configured to package, seal and label the pasta product into a container; and a handling system (290) for handling individual containers and positioning the containers relative to the outlet end (272) for receiving the extruded pasta product as well as moving a filled container relative to the packaging assembly (180). Again, the controller (210) autonomously controls the packaging assembly (180) and the handling system (290).

As indicated, the one or more sensors (240) include at least one load cell on which the mixing portion (232) can rest and act on to measure the weight of and thus the volume of flour, water and the one or more additives added to the mixing portion (232).

The load cell is in communication with the controller (200), which in turn controls the dispensing mechanisms (142, 152, 162A, 162B, 162C) of the respective flour dispensing assembly (140), water dispensing assembly (150) and the additive dispensing assemblies (160A, 160B, 160C) to determine the volume dispensed based on the weight measured and that the volume dispensed corresponds to the required volume to produce the inputted desired pasta product.

In contrast to the first embodiment, the container (230) includes a mixing portion (232) and an extrusion portion (236) fluidly connected together. The at least one conveyor screw (260) of the mixing and extrusion assembly (250) extends through the mixing portion (232) and the extension portion (236) in a generally horizontal orientation. The screw (260) is attachable to a drive shaft of the motor (120) at a first end. At least a portion of the screw (260) extending through the mixing portion (232) includes one or more mixing elements for mixing and moving contents received within the mixing portion (232).

In use, a rotational direction of the screw (260) can be reversed one or more times to prevent the pasta dough from prematurely being conveyed to the extrusion portion (236) before it has reached the required consistency.

The die unit (200) operatively associated with the outlet end (272) is in the form of a disc having a plurality of openings defined thereon configured to shape the pasta dough into the pasta product as it is forced through the selected die openings. In use, the disc is rotatable relative to the outlet end (272) to form different pasta products.

As the pasta product is extruded, the handling system (290) is configured to retrieve a container from a container dispenser (182) of the packaging assembly (180). Once a desired quantity has been dispensed into a container, the handling system (290) is configured to move the container to the labeller (184) of the packaging assembly (180) before then moving the container to the sealer (186) of the packaging assembly (180).

Like the first embodiment, this embodiment of the device (100) also includes a wireless communications module (220; not shown) in the form of a wireless network interface controller, so that the device (100) via the controller (210) can connect to a remote computing device via a wireless network (e.g., Wi-Fi (WLAN) communication, Satellite communication, RF communication, infrared communication, or Bluetooth^{™}).

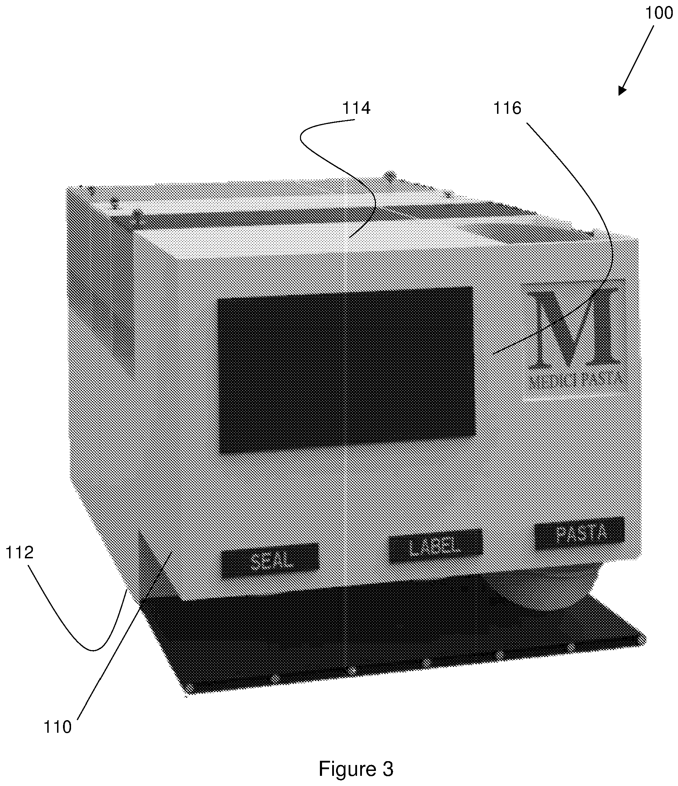

Figure 3 shows a third embodiment of the device (100). For convenience, features that are similar or correspond to features of the first or second embodiments will be referenced with the same reference numerals.

In this embodiment, the device (100) is shown in a form sized and shaped to be supported atop a bench, counter, table top, or the like.

The device (100) is formed of durable material suitable adapted to withstand continuous operating conditions.

The base unit (110) has a generally rectangular shape. The base unit (110) includes a lower surface (112), an opposed upper surface (114) and opposed side surface (116).

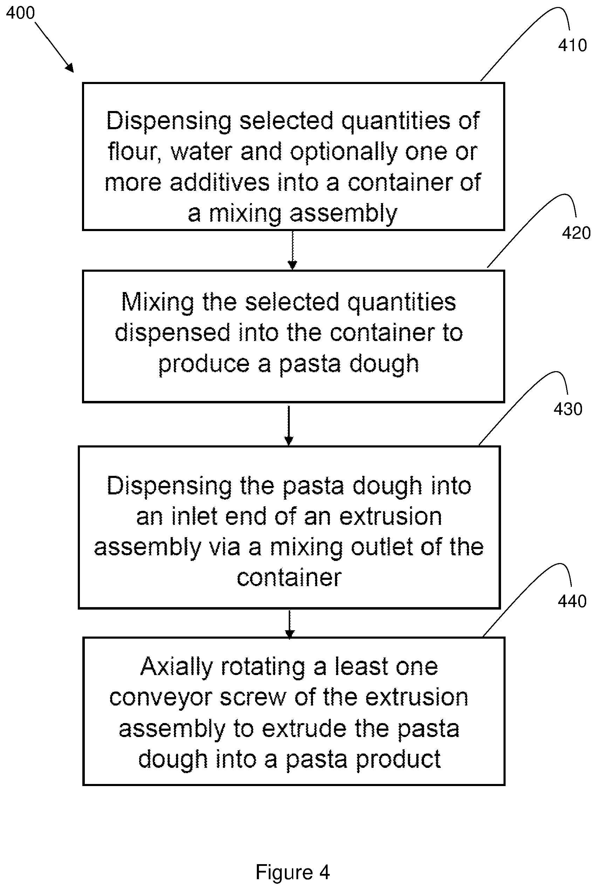

A method (400) of using the device (100) as shown in Figure 1 will now be described in detail with reference to Figure 4.

A user interacts with the controller (210) to select a type of pasta product and optionally any flavourings (i.e., additives) to be added.

At step 410, and responsive to receiving a user's input, the controller (210) instructs the flour dispensing assembly (140), the water dispensing assembly (150) and optionally any of the six additive dispensing assemblies (160A, 160B, 160C, 160D, 160E, 160F) to dispense selected volumes of the respective ingredients into the container of the mixing assembly (130) or the extrusion assembly (170). In the latter, the dispensing may be delayed until the pasta dough is transferred to the extrusion assembly (170).

At step 420, the controller (210) instructs the motor (120) to apply torque to the one or more mixing elements to mix the contents and form the pasta dough corresponding to the selected the pasta product.

The controller (210) monitors and detects an electrical load applied to the motor (120) connected to the one or more mixing elements and the rate of rotation when a constant electrical load is detected indicative of a homogenous and desired consistency of the pasta dough.

At step 430, the controller (210) instructs the sealing member of the mixing outlet (132) to move to the open position so that the pasta dough in the container of the mixing assembly (130) can be dispensed into the inlet end (174) of the extrusion assembly (170). The one or more mixing elements continue to rotate within the container of the mixing assembly (130) to facilitate the dispensing of the pasta dough into the extrusion assembly (170) via the mixing outlet (132).

At step 440, the controller (210) instructs the motor (120) to apply torque to the conveyor screw (260) of the extrusion assembly (170) to cause the conveyor screw (260) to axially rotate relative to the elongate tubular section (171) and convey the pasta dough towards the outlet end (172).

The die unit (200) operatively associated with the outlet end (172) shapes and forms the pasta dough into the selected pasta product. Specifically, the pasta dough is pushed through die openings of the die unit (200) corresponding to the selected pasta product.

In some embodiments, the method (400) further includes the steps of receiving and packaging with the packaging assembly (180) the pasta product at it emerges from the die unit (200) located at the outlet end (172) of the extrusion assembly (170).

The receiving and packaging may further include labelling a container in which the pasta product is packaged.

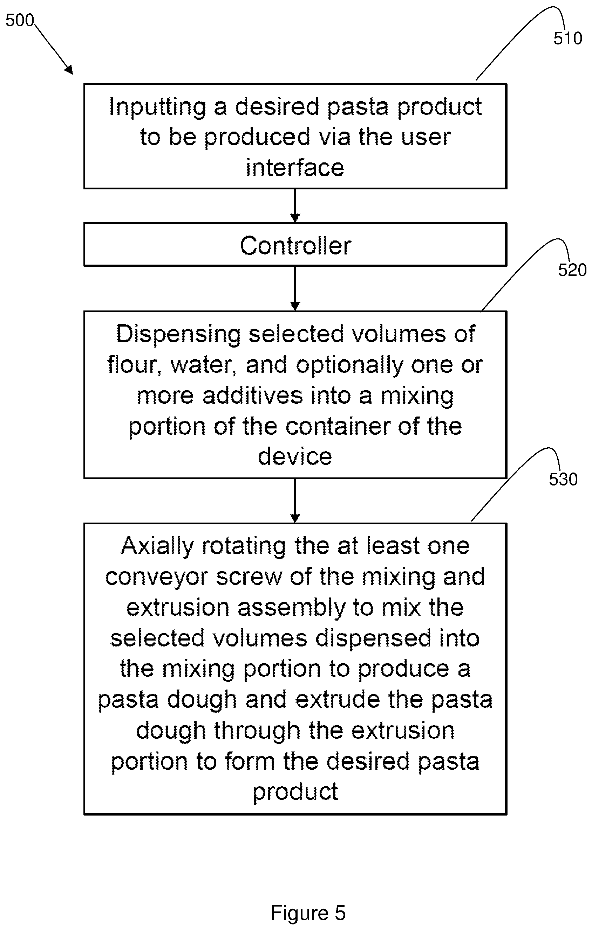

A method (500) of using the device (100) as shown in Figure 2 will now be described in detail with reference to Figure 5.

At step 510, a user interacts with the user interface (280) to input details concerning a desired pasta product. The input details include the pasta type, the amount, whether the pasta is gluten free and/or any flavour options.

Responsive to receiving the input details from the user interface (280), the controller (210) autonomously undertakes the following steps.

At step 520, the controller (210) communicates with the one or more sensors (240) and activates dispensing mechanisms (142, 152, 162A, 162B) to dispense selected volumes of flour, water and the two additives required to form the desired pasta product. The controller (210) monitors the weight of flour, water and additives dispensed into the mixing portion (232) of the container (230), and deactivates the dispensing mechanisms (142, 152, 162A, 162B) once a respective weight of ingredient dispensed corresponds to the selected volume required.

At step 530, the controller (210) instructs the motor (120) to apply torque to the conveyor screw (260) and rotate relative to the container (230) and mix the ingredients in the mixing portion (232) and form the pasta dough.

The controller (210) instructs the motor (120) to repeatedly reverse a rotational direction of the screw (260) so as to retain the ingredients and pasta dough in the mixing portion (232) until a required consistency is reached.

In some embodiments, the controller (210) monitors and detects an electrical load applied to the motor (120) and the rate of rotation to determine when a constant electrical load is detected indicative of a homogenous and desired consistency of the pasta dough.

In other embodiments, the controller (210) is in communication with one or more rotational sensors configured to measure the torque produced by the motor (120) in response to the load applied to the rotating screw (260) by the mixing of the pasta dough. In such embodiments, a constant measurement of torque is indicative that the pasta dough has reached a homogenous and desired consistency.

Once a desired consistency, the controller (210) causes the motor (120) to cease changing the rotational direction of the screw (260), and the pasta dough is conveyed by the screw (260) into the extrusion portion (236) of the container (230) and towards the outlet end (272).

The controller (210) also causes the die unit (200) to rotate relative to the outlet end (272) until openings corresponding to the desired pasta product are positioned to have the pasta dough pushed through the openings to form the desired pasta product.

In some embodiments, the method (500) further includes the steps of receiving and packaging with the handling system (290) and the packaging assembly (180) the pasta product at it emerges from the die unit (200) located at the outlet end (272) of the extrusion portion (236).

The receiving and packaging further include labelling the container in which the pasta product is packaged.

In the present specification and claims (if any), the word *'comprising'* and its derivatives including *'comprises'* and *'comprise'* include each of the stated integers but does not exclude the inclusion of one or more further integers.

Reference throughout this specification to *'one embodiment'* or *'an embodiment'* means that a particular feature, structure, or characteristic described in connection with the embodiment is included in at least one embodiment. Thus, the appearance of the phrases *'in one embodiment'* or *'in an embodiment'* in various places throughout this specification are not necessarily all referring to the same embodiment.

## Claims

1. A portable, fully automated pasta product production device (100) including:
a base unit (110) including a motor (120);
a container (230) having a mixing portion (232) including an inlet (234) and an extrusion portion (236) fluidly connected to the mixing portion (232) and including an outlet end (272) and a tubular section (271) defining an internal bore extending from the mixing portion (232) to the outlet end (272);
a flour dispensing assembly (140) for dispensing a selected volume of flour into the mixing portion (232) of the container (230);
a water dispensing assembly (150) for dispensing a selected volume of water into the mixing portion (232) of the container (230);
an additive dispensing assembly (160) including one or more sources of additives and one or more dispensing mechanisms for dispensing selected volumes of one or more additives into the container (230);
one or more sensors (240) operatively associated with the mixing portion (232) of the container (230) for measuring the selected volumes of flour and water and the one or more additives dispensed into the mixing portion (232);
a mixing and extrusion assembly (250) operatively associated with the motor (120) and the container (230), said assembly including a die unit (200) operatively associated with the outlet end (272) and at least one conveyor screw (260) located within the container (230) and extending through the mixing portion (232) and along the internal bore of the extrusion portion (236) to the outlet end (272), said at least one conveyor screw (260) configured to be axially rotatable relative to the container (230) so as to mix contents received in the mixing portion (232) via the inlet (234), convey said mixed contents to the extrusion portion (236) and extrude a pasta product at the outlet end (272) via the die unit (200);
a user interface (280) to allow a user to input a desired pasta product to be produced; and
a controller (210) operatively associated with the user interface (280) and the one or more sensors (240) and configured to autonomously control operation of the motor (120), the mixing and extrusion assembly (250), the flour dispensing assembly (140), the water dispensing assembly (150) and the additive dispensing assembly (160) to produce the desired pasta product, including determining the selected volumes of the flour and water and the one or more additives required to produce the desired pasta product selected.

2. The device (100) of claim 1, wherein the device (100) is configured to produce fresh pasta on demand in a period of about 5mins.

3. The device (100) of claim 1 or claim 2, wherein the one or more additives include one or more flavourings and wherein the device (100) is configured, responsive to user input via the user interface (280), to dispense selected one or more flavourings into the pasta product.

4. The device (100) of any one of claims 1 to 3, wherein the container (230) is operatively associated with the mixing and extrusion assembly (250) for mixing and extruding the pasta dough through the container (230).

5. The device (100) of claim 4, wherein at least a portion of the at least one conveyor screw (260) extending through the mixing portion (232) of the container (230) includes one or more mixing elements for mixing and moving contents received therein.

6. The device (100) any one of claims of 1 to 5, wherein the one or more sensors (240) include at least one load cell on which the container, or the mixing portion (230) of the container (230), rests and acts on to measure a weight of the flour, water and one or more additives dispensed into the container (230).

7. The device (100) of any one of claims 1 to 6, wherein the additive dispensing assembly (160) includes one or more sources of additives and one or more dispensing mechanisms for dispensing selected volumes of the one or more additives.

8. The device (100) of claim 7, wherein the one or more additives include any one of whole eggs, homogenised eggs, egg extract, oil, salt and the one or more flavourings.

9. The device (100) of any one of claims 1 to 8, wherein the die unit (200) has a plurality of die openings defined therein configured to create a pressure drop during an extrusion process and shape the mixed contents into the pasta product as it is forced through selected die openings.

10. The device (100) of claim 9, wherein the plurality of die openings include different sized and shaped openings corresponding to different pasta product types and the plurality of die openings are moveable relative to the outlet end (272) to position and align said selected die openings relative to the outlet end (272).

11. The device (100) of claim 9 or claim 10, wherein the die unit (200) further includes at least one blade for severing the pasta product being extruded once a desired quantity has been dispensed.

12. The device (100) of any one of claims 1 to 11, further including a dusting unit operatively associated with the die unit (200) for dusting the pasta product as it emerges from the die unit (200) with flour.

13. The device (100) of claim 12, wherein the dusting unit includes a fan configured to disperse a selected volume of flour over the pasta product and/or assist in at least partially drying the pasta product.

14. The device (100) of any one of claims 1 to 13, further including a packaging assembly (180) operatively associated with the outlet end (272) of the mixing and extrusion assembly (250) and configured to receive and package the pasta product as it emerges from the outlet end (272).

15. A method (500) of producing a pasta product with the device (100) of claim 1, said method (500) including:
inputting a desired pasta product to be produced;
determining selected volumes of flour, water and optionally one or more additives required to produce the desired pasta product inputted;
dispensing the selected volumes of flour, water and optionally one or more additives into a mixing portion (232) of the container (230) of the device (100);
axially rotating the at least one conveyor screw (260) of the mixing and extrusion assembly (250) to mix the selected volumes dispensed in the mixing portion (232) to produce a pasta dough and extrude the pasta dough through the extrusion portion (236) to form the desired pasta product,
wherein a controller (210) of the device (100), responsive to receiving said inputting, autonomously controls said dispensing and said rotating to produce the desired pasta product.

## Patentansprüche

1. Tragbare, vollautomatische Vorrichtung (100) zur Herstellung von Teigwaren, die Folgendes beinhaltet:
eine Basiseinheit (110), die einen Motor (120) beinhaltet;
einen Behälter (230), der einen Mischbereich (232) aufweist, der einen Einlass (234) und einen Extrusionsbereich (236) beinhaltet, der fluidisch mit dem Mischbereich (232) verbunden ist, und ein Auslassende (272) und einen rohrförmigen Abschnitt (271) beinhaltet, der eine interne Bohrung definiert, die sich vom Mischbereich (232) zum Auslassende (272) erstreckt;
eine Mehlausgabebaugruppe (140) zum Ausgeben eines ausgewählten Volumens an Mehl in den Mischbereich (232) des Behälters (230);
eine Wasserausgabebaugruppe (150) zum Ausgeben eines ausgewählten Volumens an Wasser in den Mischbereich (232) des Behälters (230);
eine Zusatzstoffausgabebaugruppe (160), die eine oder mehrere Zusatzstoffquellen und eine oder mehrere Ausgabemechanismen zum Ausgeben ausgewählter Volumina eines oder mehrerer Zusatzstoffe in den Behälter (230) beinhaltet;
einen oder mehrere Sensoren (240), die betriebsmäßig mit dem Mischbereich (232) des Behälters (230) zum Messen der ausgewählten Volumina an Mehl und Wasser und des einen oder der mehreren Zusatzstoffe, die in den Mischbereich (232) ausgegeben werden, assoziiert sind;
eine Misch- und Extrusionsbaugruppe (250), die betriebsmäßig mit dem Motor (120) und dem Behälter (230) assoziiert ist, wobei die Baugruppe eine Düseneinheit (200) beinhaltet, die betriebsmäßig mit dem Auslassende (272) assoziiert ist, und mindestens eine Förderschraube (260), die innerhalb des Behälters (230) lokalisiert ist und sich durch den Mischbereich (232) und entlang der internen Bohrung des Extrusionsbereichs (236) zum Auslassende (272) erstreckt, wobei die mindestens eine Förderschraube (260) dazu konfiguriert ist, relativ zum Behälter (230) rotierbar zu sein, so, dass der über den Einlass (234) in den Mischbereich (232) aufgenommene Inhalt gemischt wird, der gemischte Inhalt zum Extrusionsbereich (236) befördert wird und eine Teigware am Auslassende (272) über die Düseneinheit (200) extrudiert wird;
eine Benutzerschnittstelle (280), die es einem Benutzer erlaubt, eine gewünschte zu produzierende Teigware einzugeben; und
eine Steuerung (210), die betriebsmäßig mit der Benutzerschnittstelle (280) und dem einen oder den mehreren Sensoren (240) assoziiert und dazu konfiguriert ist, den Betrieb des Motors (120), der Misch- und Extrusionsbaugruppe (250), der Mehlausgabebaugruppe (140), der Wasserausgabebaugruppe (150) und der Zusatzstoffausgabebaugruppe (160) autonom zu steuern, um die gewünschte Teigware zu produzieren, einschließlich einer Bestimmung, welche Volumina an Mehl und Wasser sowie welche ein oder mehrere Zusatzstoffe erforderlich sind, um die gewünschte Teigware zu produzieren, die man ausgewählt hat.

2. Vorrichtung (100) nach Anspruch 1, wobei die Vorrichtung (100) dazu konfiguriert ist, auf Anfrage frische Teigwaren in einer Periode von etwa 5 min zu produzieren.

3. Vorrichtung (100) nach Anspruch 1 oder Anspruch 2, wobei der eine oder die mehreren Zusatzstoffe ein oder mehrere Aromastoffe beinhalten, und wobei die Vorrichtung (100) dazu konfiguriert ist, auf Benutzereingaben über die Benutzerschnittstelle (280) zu reagieren, um einen oder mehrere ausgewählte Aromastoffe in die Teigware auszugeben.

4. Vorrichtung (100) nach einem der Ansprüche 1 bis 3, wobei der Behälter (230) mit der Misch- und Extrusionsbaugruppe (250) zum Mischen und Extrudieren von Teigwarenteig durch den Behälter (230) betriebsmäßig assoziiert ist.

5. Vorrichtung (100) nach Anspruch 4, wobei mindestens ein Bereich der mindestens einen Förderschraube (260), die sich durch den Mischbereich (232) des Behälters (230) erstreckt, ein oder mehrere Mischelemente zum Mischen und Bewegen des darin aufgenommenen Inhalts beinhaltet.

6. Vorrichtung (100) nach einem der Ansprüche 1 bis 5, wobei der eine oder die mehreren Sensoren (240) mindestens eine Wägezelle beinhalten, auf der der Behälter, oder der Mischbereich (230) des Behälters (230), aufliegt und auf die er einwirkt, um das Gewicht des Mehls, des Wassers und eines oder mehrerer Zusatzstoffe zu messen, die in den Behälter (230) ausgegeben werden.

7. Vorrichtung (100) nach einem der Ansprüche 1 bis 6, wobei die Zusatzstoffausgabebaugruppe (160) eine oder mehrere Zusatzstoffquellen und einen oder mehrere Ausgabemechanismen zum Ausgeben ausgewählter Volumina des einen oder der mehreren Zusatzstoffe beinhaltet.

8. Vorrichtung (100) nach Anspruch 7, wobei der eine oder die mehreren Zusatzstoffe eines der folgenden beinhalten: ganze Eier, homogenisierte Eier, Eiextrakt, Öl, Salz und den einen oder die mehreren Aromastoffe.

9. Vorrichtung (100) nach einem der Ansprüche 1 bis 8, wobei die Düseneinheit (200) eine Mehrzahl darin definierter Düsenöffnungen aufweist, die dazu konfiguriert sind, während eines Extrusionsprozesses einen Druckabfall zu erzeugen und den gemischten Inhalt zu der Teigware zu formen, wenn er durch ausgewählte Düsenöffnungen gezwängt wird.

10. Vorrichtung (100) nach Anspruch 9, wobei die Mehrzahl der Düsenöffnungen unterschiedliche Größe und Form beinhalten, die verschiedenen Teigwarentypen entsprechen, und die Mehrzahl der Düsenöffnungen relativ zum Auslassende (272) beweglich sind, um die ausgewählten Düsenöffnungen relativ zum Auslassende (272) zu positionieren und auszurichten.

11. Vorrichtung (100) nach Anspruch 9 oder Anspruch 10, wobei die Düseneinheit (200) ferner mindestens eine Klinge zum Trennen der extrudierten Teigware beinhaltet, sobald eine gewünschte Quantität ausgegeben wurde.

12. Vorrichtung (100) nach einem der Ansprüche 1 bis 11, die ferner eine Bestäubungseinheit beinhaltet, die betriebsmäßig mit der Düseneinheit (200) assoziiert ist, um die Teigware beim Austritt aus der Düseneinheit (200) mit Mehl zu bestäuben.

13. Vorrichtung (100) nach Anspruch 12, wobei die Bestäubungseinheit einen Ventilator beinhaltet, der dazu konfiguriert ist, ein ausgewähltes Volumen an Mehl über die Teigware zu dispergieren und/oder zumindest partiell zum Trocknen der Teigware beizutragen.

14. Vorrichtung (100) nach einem der Ansprüche 1 bis 13, die ferner eine Verpackungsbaugruppe (180) beinhaltet, die betriebsmäßig mit dem Auslassende (272) der Misch- und Extrusionsbaugruppe (250) assoziiert und dazu konfiguriert ist, die Teigware aufzunehmen und zu verpacken, wenn sie aus dem Auslassende (272) austritt.

15. Verfahren (500) zur Herstellung von Teigwaren mit der Vorrichtung (100) nach Anspruch 1, wobei das Verfahren (500) beinhaltet:
Eingeben einer gewünschten Teigware, die produziert werden soll;
Bestimmen ausgewählter Volumina an Mehl, Wasser und optional einem oder mehreren Zusatzstoffen, die erforderlich sind, um die eingegebene gewünschte Teigware zu produzieren;
Ausgeben der ausgewählten Volumina an Mehl, Wasser und optional einem oder mehreren Zusatzstoffen in einen Mischbereich (232) des Behälters (230) der Vorrichtung (100);
axiales Rotieren der mindestens einen Förderschraube (260) der Misch- und Extrusionsbaugruppe (250), um die in den Mischbereich (232) ausgegebenen ausgewählten Volumina zu mischen, um einen Teigwarenteig zu produzieren, und Extrudieren des Teigwarenteigs durch den Extrusionsbereich (236), um die gewünschte Teigware zu bilden,
wobei eine Steuerung (210) der Vorrichtung (100) auf das Empfangen der Eingabe reagiert und die Abgabe und die Rotation autonom steuert, um die gewünschte Teigware herzustellen.

## Revendications

1. Dispositif (100) de production de produits de pâtes, portable et entièrement automatisé, incluant :
une unité de base (110) incluant un moteur (120) ;
un récipient (230) présentant une partie de mélange (232) incluant une entrée (234) et une partie d'extrusion (236) en liaison fluidique avec la partie de mélange (232), et incluant une extrémité de sortie (272) et une section tubulaire (271) définissant un alésage interne s'étendant de la partie de mélange (232) à l'extrémité de sortie (272) ;
un ensemble (140) de distribution de farine pour distribuer un volume sélectionné de farine dans la partie de mélange (232) du récipient (230) ;
un ensemble (150) de distribution d'eau pour délivrer un volume d'eau sélectionné dans la partie de mélange (232) du récipient (230) ;
un ensemble (160) de distribution d'additifs incluant une ou plusieurs sources d'additifs et un ou plusieurs mécanismes de distribution pour distribuer des volumes sélectionnés d'un ou plusieurs additifs dans le récipient (230) ;
un ou plusieurs capteurs (240) associés de manière opérationnelle à la partie de mélange (232) du récipient (230) pour mesurer les volumes sélectionnés de farine et d'eau ainsi que les un ou plusieurs additifs ajoutés dans la partie de mélange (232) ;
un ensemble de mélange et d'extrusion (250) associé de manière opérationnelle au moteur (120) et au récipient (230), ledit ensemble incluant une unité de découpe (200) associée de manière opérationnelle à l'extrémité de sortie (272) et au moins une vis sans fin (260) située à l'intérieur du récipient (230) et s'étendant à travers la partie de mélange (232) et le long de l'alésage interne de la partie d'extrusion (236) jusqu'à l'extrémité de sortie (272), ladite au moins une vis sans fin (260) étant configurée pour pouvoir tourner axialement par rapport au récipient (230) de manière à mélanger des contenus reçus dans la partie de mélange (232) via l'entrée (234), transporter lesdits contenus mélangés vers la partie d'extrusion (236) et extruder un produit de pâtes à l'extrémité de sortie (272) via l'unité de découpe (200) ;
une interface utilisateur (280) permettant à un utilisateur de saisir un produit de pâtes souhaité à produire ; et
un dispositif de commande (210) associé de manière opérationnelle à l'interface utilisateur (280) et aux un ou plusieurs capteurs (240), et configuré pour commander de manière autonome le fonctionnement du moteur (120), de l'ensemble de mélange et d'extrusion (250), de l'ensemble (140) de distribution de farine, de l'ensemble (150) de distribution d'eau et de l'ensemble (160) de distribution d'additifs pour produire le produit de pâtes souhaité, y compris la détermination des volumes sélectionnés de farine et d'eau et des un ou plusieurs additifs nécessaires pour produire le produit de pâtes souhaité sélectionné.

2. Dispositif (100) selon la revendication 1, dans lequel le dispositif (100) est configuré pour produire des pâtes fraîches à la demande en environ 5 minutes.

3. Dispositif (100) selon la revendication 1 ou la revendication 2, dans lequel les un ou plusieurs additifs incluent un ou plusieurs arômes et dans lequel le dispositif (100) est configuré, en réponse à une entrée utilisateur via l'interface utilisateur (280), pour distribuer un ou plusieurs arômes sélectionnés dans le produit de pâtes.

4. Dispositif (100) selon l'une quelconque des revendications 1 à 3, dans lequel le récipient (230) est associé de manière opérationnelle à l'ensemble de mélange et d'extrusion (250) pour mélanger et extruder la pâte à pâtes à travers le récipient (230).

5. Dispositif (100) selon la revendication 4, dans lequel au moins une partie de l'au moins une vis sans fin (260) s'étendant à travers la partie de mélange (232) du récipient (230) inclut un ou plusieurs éléments de mélange pour mélanger et déplacer des contenus qui y sont reçus.

6. Dispositif (100) selon l'une quelconque des revendications 1 à 5, dans lequel les un ou plusieurs capteurs (240) incluent au moins une cellule de pesée sur laquelle le récipient, ou la partie de mélange (230) du récipient (230), repose et agit pour mesurer un poids de la farine, de l'eau et d'un ou plusieurs additifs distribués dans le récipient (230).

7. Dispositif (100) selon l'une quelconque des revendications 1 à 6, dans lequel l'ensemble (160) de distribution d'additifs inclut une ou plusieurs sources d'additifs et un ou plusieurs mécanismes de distribution pour distribuer des volumes sélectionnés des un ou plusieurs additifs.

8. Dispositif (100) selon la revendication 7, dans lequel les un ou plusieurs additifs incluent l'un quelconque parmi des œufs entiers, des œufs homogénéisés, un extrait d'œuf, de l'huile, du sel et les un ou plusieurs arômes.

9. Dispositif (100) selon l'une quelconque des revendications 1 à 8, dans lequel l'unité de découpe (200) présente une pluralité d'ouvertures de découpe définies dans celle-ci, configurées pour créer une chute de pression pendant un processus d'extrusion et façonner le contenu mélangé pour obtenir le produit de pâtes au fur et à mesure qu'il est poussé à travers des ouvertures de découpe sélectionnées.

10. Dispositif (100) selon la revendication 9, dans lequel la pluralité d'ouvertures de découpe inclut des ouvertures de tailles et de formes différentes correspondant à divers types de produits de pâtes et la pluralité d'ouvertures de découpe sont mobiles par rapport à l'extrémité de sortie (272) afin de positionner et d'aligner lesdites ouvertures de découpe sélectionnées par rapport à l'extrémité de sortie (272).

11. Dispositif (100) selon la revendication 9 ou la revendication 10, dans lequel l'unité de découpe (200) inclut en outre au moins une lame pour couper le produit de pâtes en cours d'extrusion une fois qu'une quantité souhaitée a été distribuée.

12. Dispositif (100) selon l'une quelconque des revendications 1 à 11, incluant en outre une unité de saupoudrage associée de manière opérationnelle à l'unité de découpe (200) pour saupoudrer le produit de pâtes au fur et à mesure qu'il sort de l'unité de découpe (200) avec de la farine.

13. Dispositif (100) selon la revendication 12, dans lequel l'unité de saupoudrage inclut un ventilateur configuré pour disperser un volume sélectionné de farine sur le produit de pâtes et/ou aider à sécher au moins partiellement le produit de pâtes.

14. Dispositif (100) selon l'une quelconque des revendications 1 à 13, incluant en outre un ensemble d'emballage (180) associé de manière opérationnelle à l'extrémité de sortie (272) de l'ensemble de mélange et d'extrusion (250) et configuré pour recevoir et emballer le produit de pâtes au fur et à mesure qu'il sort de l'extrémité de sortie (272).

15. Procédé (500) de production d'un produit à base de pâtes à l'aide du dispositif (100) selon la revendication 1, ledit procédé (500) incluant :
l'entrée d'un produit de pâtes souhaité à produire ;
la détermination de volumes sélectionnés de farine, d'eau et éventuellement d'un ou plusieurs additifs nécessaires à la production du produit de pâtes souhaité entré :
la distribution des volumes sélectionnés de farine, d'eau et éventuellement d'un ou plusieurs additifs dans une partie de mélange (232) du récipient (230) du dispositif (100) ;
la rotation axiale de l'au moins une vis sans fin (260) de l'ensemble de mélange et d'extrusion (250) pour mélanger les volumes sélectionnés distribués dans la partie de mélange (232) afin de produire une pâte à pâtes et extruder la pâte à pâtes à travers la partie d'extrusion (236) pour former le produit de pâtes souhaité,
dans lequel un dispositif de commande (210) du dispositif (100), en réponse à la réception de ladite entrée, commande de manière autonome ladite distribution et ladite rotation pour produire le produit de pâtes souhaité.
